# EUROPEAN PATENT APPLICATION

(11) **EP 2 096 838 A1**
(43) Date of publication of application: **02.09.2009**
(21) Application number: 09425081.8
(22) Date of filing: 27.02.2009
(51) Int. Cl.: H04L 29/08, H04L 29/06, H04M 3/51, H04M 7/00

(54) **Interactive system for synchronized multimedia communication on the web**

(30) Priority: 29.02.2008 IT MI20080333
(71) Applicant: Telecom Design Srl, 25036 Palazzlo sullíOlgio (BS) (IT)
(72) Inventor: Telecom Design Srl, 25036 Palazzlo sullíOlgio (BS) (IT)

(57) **Abstract**

This invention is about an interactive system for synchronized navigation, between one or more users and an operator, on the web. The system permits the operator to show the user those internet pages of its interest e to communicate to the user in text, audio and video mode.

## Description

This invetion is about an interactive system that enables synchronized multimedia communication on the Web.

Communication through computers includes all informatic based technologies, especially personal computers, which enable particular forms of communication between distant people.

Those technologies permit, using a computer, distance communication in a graphic or textual way, synchronized or out of synchronism, through a telematic network made of two or three computers (like the Internet network). Conditions to implement such a form of communication is the use of a computer from both the issuer and the receiving, and moreover a link to access a telematic network (traditional telco, wired or wireless), with specialized softwares of communication.

In details, when talking about out of synchronism computers communication we have interactions mediated through "third instruments" like the e-mail a newsgroup or a mailing list. On the other hand in the synchronized communication through computers we have "live" interaction in real time between users connected by the "Internet Relay Chat" in case of direct communication between two users, or "Instant Messaging

Systems" in case of simultaneous communication of whole groups.

State of the art in the condivision of multimedia contents on the Web includes both synchronized and out of synchronism computers communication.

When referring to synchronized communication, systems currently available allow to share multimidia contents, both published or remotely stored.

Those systems, for example, permit you to show to a multitude of registered users your own desktop or even to give the users the direct control of your machine.

Moreover it's possible to share pictures, videos or presentations "real time", within the same registered multitude.

In the end some systems are able to synchronize specific events with the contents of a Web page. When events change then also the Web page contents shift to fit the users needs.

When considering the entire Internet products and services panorama, the disadvantages of the out of synchronism communications appear obvious: the impossibility to establish a "real time" communication between demand (user) and supply (company/operator) tend to be influent on the speed of transactions and on the completeness and comprehensibility of the information provided.

Systems which allow both the access to multimedia contents and a "real time" interaction between the user and the supplier are negatively influenced by the bidirectional nature of the communication flow with several disadvantages. First of all it is required a similar hardware and software platform between operator and user since it's not possible to modulate the participation to the communication flow on the the different informatic equipment of the users.

Furthermore "real time" systems developed so far are based on a protected way of access such as a registration that enables the service or, on the other way, on social networks. In the first case the main disadvantage is the limited accessibility while in the second the interaction is public and not private.

It's a widespead need to have a multimedia communication system which allow the operator to interact "real time" with a customer and to use applications to promote products and services on the Web.

And again, an importan need is to develop a system that esures the privacy of the communication flow or, alternatively, the involvement of a plurality of people at the same time.

In the end it's important to have a communication system properly working even without the identity between the hardware of the user and the operator.

Purpose of this invention is to create an interactive system for multimedia communication able to connect "real time" an operator with any user of a Web site, adapting to the hardware platform of the user itself and in the end being able to support all contents and softwares for the promotion and supply of products and services, transactive platforms included.

Another aim of this invention is to realize a system that allows an operator to guide a user permitting to show "real time" those contents or those Web pages of its interest.

Further purpose of the invention is to permit a private communication between the operator and the user or, on the other way, a wider channel opened to the operator and a plurality of users.

The goals are achieved by this invention, that is about a Web based interactive system of synchronized multimedia communication, and through which contents come from the company operator (or public institution operator) to the final user.

Following this invetion the interactive system includes a real time communication form integrated on the Web pages that permits the user to see an operator an even to talk with live.

In detail, the mentioned form allows to communicate via chat, audio or video modulating to the hardware platform of the user. This way it's always possible to have a text discussion with the operator while the audio and video interaction is subjected to the possibility of the user to work with a microphone and/or a webcam.

This way it's possible for the operator to receive real time requests by the users, for example an information about a product or a service, and to guide the person to the Web pages with the content required.

The system, as described in this invention, is able to guarantee both a private communication between two users and interactions with a plurality of people.

This way it's possible to ensure the privacy of the user when doing trasaction or sharing personal informaions and at the same time the flexibility to open the conversation to a multitude when needed, for example in a conference.

### DESCRIPTION OF DRAWINGS

These benefits are schematically described in the attached drawings which make understandable the interactions between user and operator theorized in the invention object of this request.

Figure1 summarizes the communication flow on both the operator and the user side, which lead to the mutual interaction user/operator.

Figure 2 descibes the sequence of operations the system needs as an input from the operator to begin to communicate to the user.

Figure 3 shows the process the user needs to communicate with the operator.

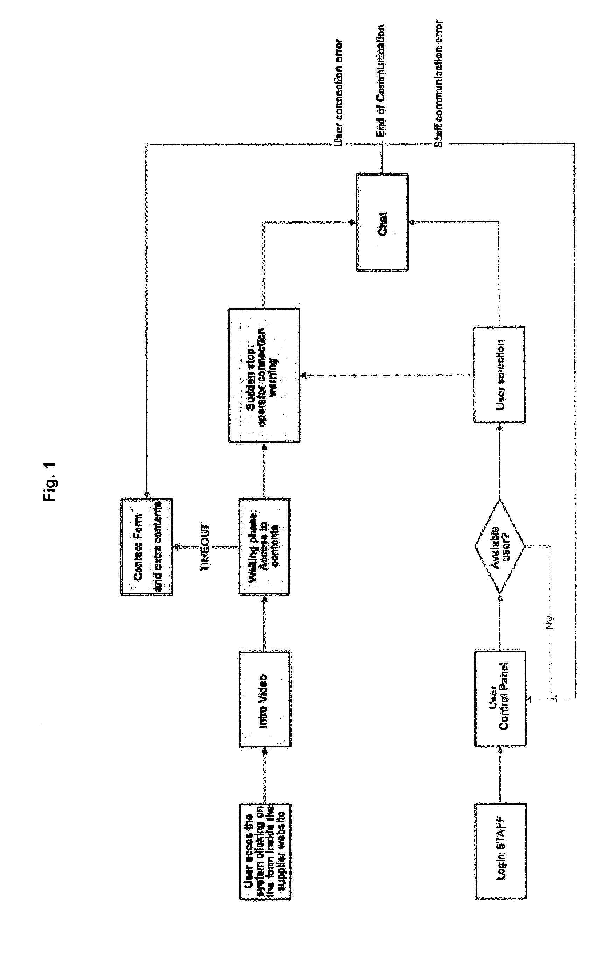

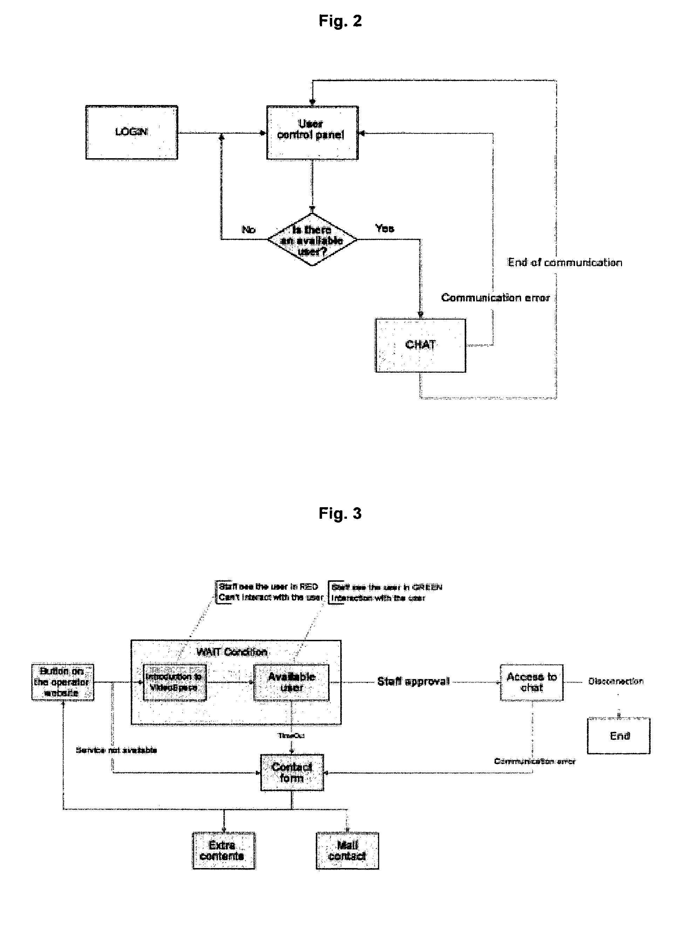

When visualizing the main web page, determined by the administrator as the default entry-to-the-service page, the user access to comunication with the operator positioning the cursor on the corresponding element of the same page and by left clicking the mouse (Fig. 1 and 3).

The following step is a waiting phase to check the avaiability of an operator. In case of a negative answer a standard form will be displayed to the user in order to contact with the customer service and receive, in a second moment, the content required trough the e-mail. (Fig. 1)

Instead, when an operator is avaiable a mutual communication begins.

In particular, the operator appears in video inside the window of the communication form object of this invention, and starts to communicate in text mode or, if possible, even in audio.

The user can anyway choose if to communicate only in text mode or showing its own face to the operator.

The system permits also to the operator, through a dedicated control panel, to check the presence of waiting users, in a positive case the operator starts communicating to them too. (Fig. 2)

## Claims

1. Interactive system for synchronized multimedia communication on the Web **characterized by** being inclusive of a real time communication form, integrated in web pages, which allows the user to see in video an operator and to communicate both in text and audio mode.

2. Interactive system **characterized by** permitting the operator to show the user, real time, those internet pages with the contents it's looking for and at the same time to manage softwares and application to promote and offer products or services, including transactive platforms.

3. Interactive system **characterized by** permitting a web communication flow in an audio/video integrated mode between the operator and a single user when not a plurality of subjects (one to a moltitude).
